# EUROPEAN PATENT APPLICATION

(11) **EP 1 653 326 A2**
(43) Date of publication of application: **03.05.2006**
(21) Application number: 05109891.1
(22) Date of filing: 24.10.2005
(51) Int. Cl.: G06F 1/16

(54) **Image forming apparatus**

(30) Priority: 27.10.2004 KR 2004086024
(71) Applicant: Samsung Electronics Co., Ltd., Suwon-si, Gyeonggi-Do (KR)
(72) Inventor: Choi, Young-min, Seoul (KR)
(74) Representative: Derry, Paul Stefan

(57) **Abstract**

An image forming apparatus including operation panels. The image forming apparatus includes a body, a plurality of connectors, each being formed at a predetermined position on the body, and a plurality of operation panels connected with the body through the plurality of connectors. Connecting positions of the plurality of operation panels are changeable by replacing panels with one another. Each connector has a plurality of sockets which are connectible with the plurality of operation panels so that each connector can be connected with any of the operation panels. Accordingly, the positions of the operation panels are changeable to achieve a convenient arrangement.

## Description

The invention relates to image forming apparatus comprising: a body; and plural operation panels connected at respective locations with the body. The invention also relates to a method of altering image forming apparatus comprising: a body; and plural operation panels connected at respective locations with the body.

With the development of electronic technology, image forming apparatuses having a variety of functions have been developed and are being widely utilised. A conventional image forming apparatus can be apparatus that scans images or prints images on paper, and includes a printer, a photocopier, a scanner, a facsimile machine, or a multifunction peripheral. In general, conventional image forming apparatus is provided with an operation panel to allow a user to control operations of the conventional image forming apparatus. To utilise actively various functions provided by the conventional image forming apparatus, the operation panel can need to be quite large.

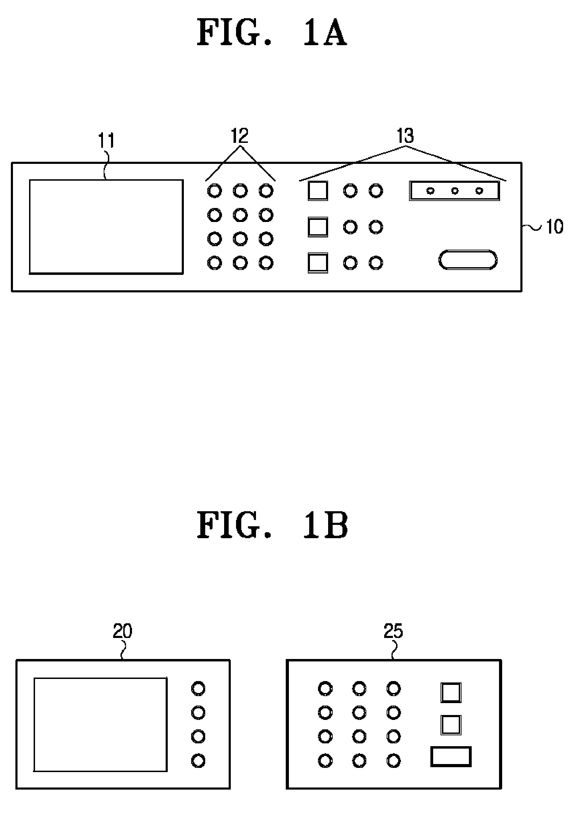

Figures 1A and 1B are views illustrating operation panels provided on conventional image forming apparatus. Referring to Figure 1A, an operation panel 10 is fabricated in an integrated form, which integrates an output window 11, numeric buttons 12, and a plurality of selection buttons 13 into a single operation panel. Since the integrated operation panel 10 is large in size, it is mainly used in a large and complex conventional image forming apparatus.

Referring to Figure 1B, an operation panel may be divided into a plurality of panels and attached to a conventional image forming apparatus. Such a separable panel is mainly used in a small-sized conventional image forming apparatus which cannot use the integrated operation panel 10. The operation panel is divided into an output panel 20 and an input panel 25, and the respective output and input panels 20 and 25 are attached to different positions.

The operation panels as illustrated in Figures 1A and 1B are attached to fixed positions on the respective conventional image forming apparatuses. The output window 11 (or output panel 20) for displaying an operation status of the conventional image forming apparatus and a button key for inputting a selection signal are attached to fixed positions.

The inventors have identified improvements to the above-described apparatus.

The apparatus of the invention is characterised in that the operation panels are inter-changeable with one another.

Using the invention, operation panels that can be located according to a user's preference. Thus, the fact that alphabet buttons located at the right side for the convenience of a right-handed person are inconvenient to a left-handed person can be overcome by changing the locations of the panels. Similarly, if a numeric button for inputting a fax number is attached to a center of the operation panel, a user who mainly uses a fax function can with the prior art feel inconvenienced when using the numeric button, but this can be overcome using the invention.

Each of the locations on the body preferably includes a connector comprising plural sub-connectors each of which is connectible with a different one of the operation panels. Preferably, each sub-connector is connected to one or more bus lines. Advantageously, each sub-connector is visibly distinguishable from other sockets of the respective connector.

The method of the invention is characterised by comprising inter-changing the operation panels with one another.

Embodiments of the present invention will now be described with reference to the accompanying drawings, in, which:
Figures 1A and 1B illustrate operation panels provided on conventional image forming apparatuses;
Figure 2 illustrates an embodiment of image forming apparatus according to the invention;
Figure 3 illustrates a connection part used in the image forming apparatus of Figure 2;
Figures 4A through 4C illustrate alternative arrangements of the operation panels of the image forming apparatus of Figure 2; and
Figures 5A and 5B illustrate operation panels in another embodiment of the invention.

In the drawings, like reference numerals refer to the like elements throughout.

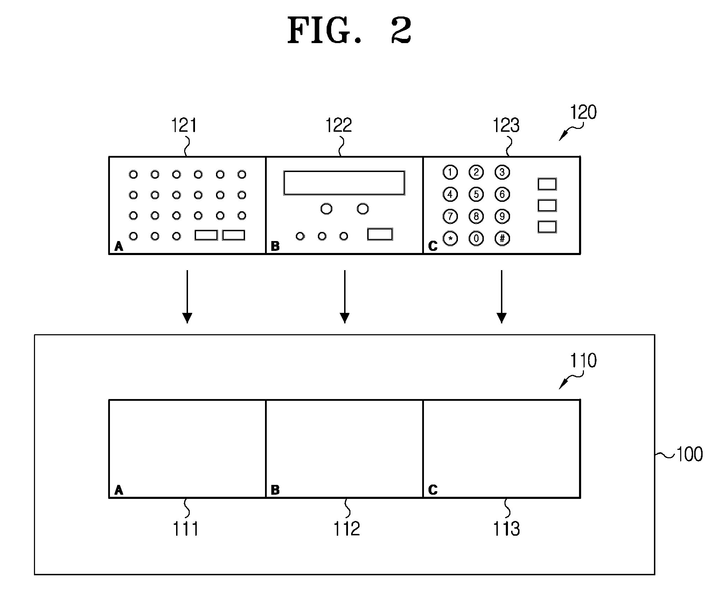

Referring to Figure 2, the image forming apparatus comprises a body 100, a connection part 110 and an operation panel 120.

The body 100 represents the image forming apparatus except the operation panel and the connection part. For the convenience of explanation, detailed illustration of components of the body 100, such as a paper feeding part and a paper discharge part, are omitted.

The connection part 110 is disposed on a predetermined position of the body 100 to connect with the operation panel 120. The connection part 110 may be disposed on any place that can allow a user to view the connection part 110 easily. For example, the connection part 110 may be disposed on an upper surface or a front surface of the body 100.

The operation panel 120 is divided into a predetermined number of panels. In the embodiment illustrated in Figure 2, the operation panel 120 is divided into a panel A 121, a panel B 122 and a panel C 123. The panel A 121 may be a letter input panel to input letters such as alphabets, the panel B 122 may be an output panel to display an operation status of the image forming apparatus, or inputted text or figures, and the panel C 123 may be a number input panel to input numbers. The output panel may be a liquid crystal display (LCD) window or a light emitting diode (LED) display. Although not illustrated in Figure 2, a menu input panel (not shown) may be additionally provided on the image forming apparatus to select a menu and set a function. The operation panel functions as a user interface to communicate a user interaction with the image forming apparatus. The operation panel may be divided into panels according to functions provided by the image forming apparatus, for example, a letter input, a numeric input panel, an output panel (display), etc.

The connection part 110 may be divided into a connector A 111, a connector B 112, and a connector C 113 which correspond respectively to the panels 121, 122, and 123 in number. Each panel 121, 122, and 123 may be connected with the image forming apparatus at any of the connectors 111, 112, and 113 so that the panels 121, 122, and 123 can be disposed in different positions with respect to the body 100. That is, the panels are changeable in position with respect to each other and the connection part 110. In other words, the panel A 111 can be connected with the connector A 121, the connector B 112 or the connector C 113. The panel B 122 can be connected with the connector A 111, the connector B 112 or the connector C 113, and the panel C 123 can be connected with the connector A 111, the connector B 112, or the connector C 123.

Accordingly, a user can decide the positions at which to place the output panel 122, the number input panel 123, the letter input panel 121 and the menu input panel according to a desired order.

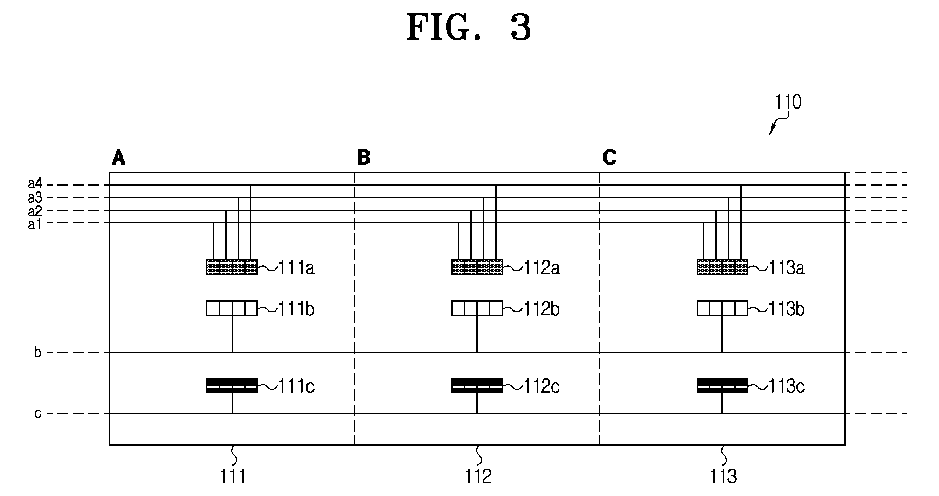

Figure 3 illustrates an exemplary connection part 110 fabricated to be connectible with any of the panels 121, 122, and 123. As illustrated in Figures 2 and 3, the connection part 110 is divided into the connector A 111, the connector B 112, and the connector C 113. However, this should not be considered as limiting. For instance, the connection part 110 may include more than three connectors.

Referring to Figure 3, each connector 111, 112, and 113 has sockets that correspond to the panels 121, 122, and 123. Each socket may connect and secure one of the panels 121, 122, or 123 to the body 100.

For example, the connector A 111 has a socket A 111a, a socket B 111b, and a socket C 111c which correspond to the panel A 121, the panel B 122, and the panel C 123, respectively. Each of the sockets 111a, 111b, and 111c is connected with a corresponding bus line (or corresponding bus lines) provided in the body 100. More specifically, the socket A 111a is connected to bus lines al to a4, the socket B 111 b to a bus line b, and the socket C 111 c to a bus line c.

The bus lines al to a4, b, and c are connected with a controller (not shown) disposed in the image forming apparatus to transmit input signals to the controller or to receive control signals from the controller.

The connector B 112 and the connector C 113 respectively have sockets A 112a and 113a, sockets B 112b and 113b, and sockets C 112c and 113c. Accordingly, each connector 111, 112, and 113 may be connected with any of the panels 121, 122, and 123 so that the panels 121, 122, and 123 can change positions with one another.

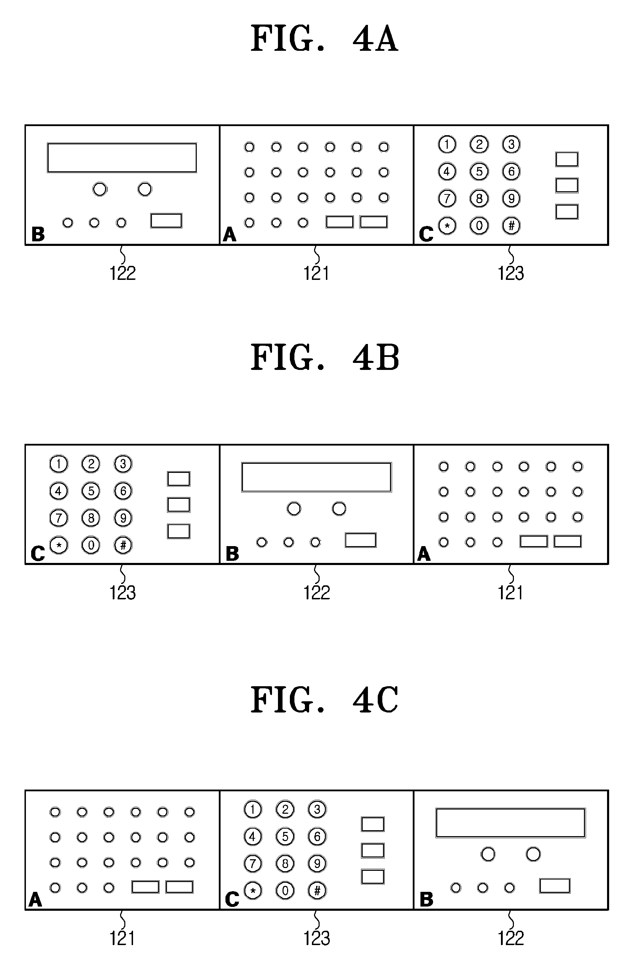

As illustrated in Figure 4A, the panels are arranged in an order B, A and C from left to right. To arrange the panels as illustrated in Figure 4A, the panel B 122 is connected with the socket B 111b of the connector A 111, the panel A 121 is connected with the socket A 112a of the connector B 112, and the panel C 123 is connected with the socket C 113c of the connector C 113.

Operation of the image forming apparatus in which the panels are arranged as illustrated in Figure 4A is explained below when the panel A 121 is a letter input panel, the panel B 122 is an output panel, and the panel C 123 is a number input panel. When a user selects a certain letter through the panel A 121, information about the selected letter is transmitted to the bus lines a1 through a4 through the socket A 112a of the connector B 112. Accordingly, the controller comprehends the selected letter and transmits the letter information to the panel B 122 through the bus line b and the socket B 111b. The panel B 122 displays the transmitted letter information on a screen.

If a frequent user is a right-handed person and mainly uses the number input panel, the panels 121 to 123 may be arranged as illustrated in Figure 4A for the convenience of the right-handed user.

Alternatively, the panels 121, 122, and 123 may be arranged in the order of C, B, A as illustrated in Figure 4B by connecting the panel C 123 with the socket C 111 c of the connector A 111, connecting the panel B 122 with the socket B 112b of the connector B 112, and connecting the panel A 121 with the socket A 113a of the connector C 113.

As a further alternative, the panels 121, 122, and 123 may be arranged in the order of A, C and B as illustrated in Figure 4C for the convenience of a left-handed person.

If another user uses the panels 121, 122, 123 or a most frequently used function is changed, the panels 121 to 123 may be disconnected from the connectors 111, 112, and 113, and may be connected with the connectors 111, 112, and 113 in a desired order so that the panels 121, 122, and 123 can be easily changed in position, that is, placed according to a different arrangement.

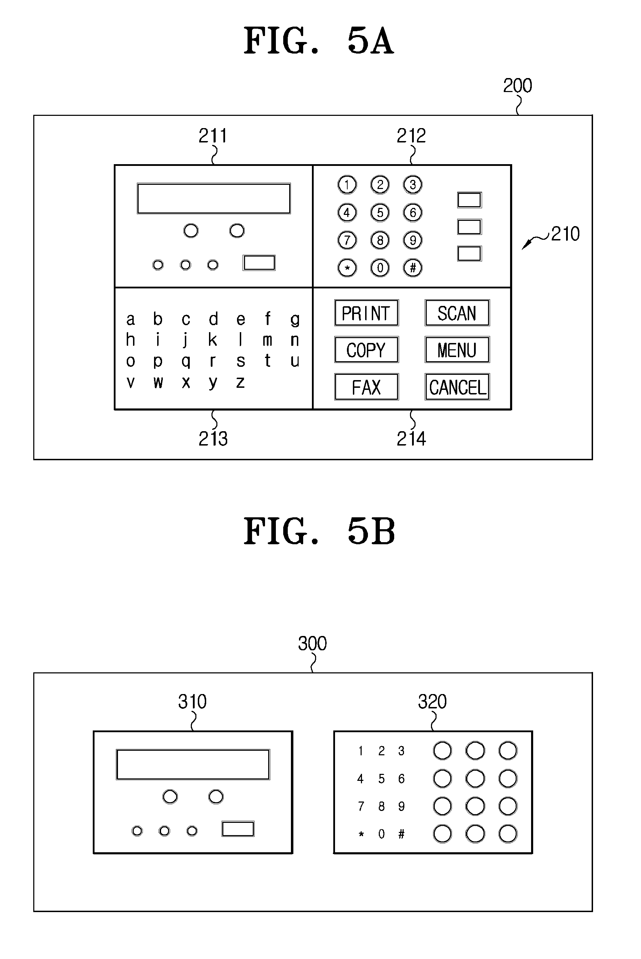

Figure 5A illustrates an operation panel 210 divided into four (4) panels 211, 212, 213, and 214. A connector connected with each panel has four (4) sockets which correspond to the respective panels 211, 212, 213 and 214. The structure of the connector and a connecting method thereof will be omitted since they were described with reference to Figure 3 and Figure 4.

As illustrated in Figure 5B, an output panel 310 and an input panel 320 may be placed apart from each other by a predetermined distance on a body 300. That is to say that the panels may not be contiguous. A user can switch positions of the output panel 310 and the input panel 320 by detaching the output panel 310 and the input panel 320 from a body 300 and attaching one in place of the other.

As described above, a user can change the positions of the panels 121, 122, and 123 of Figure 2 by disconnecting the panels 121, 122, and 123 from the connectors 111, 112, and 113 and then connecting the panels 121, 122, and 123 with the connectors in a desired order, as illustrated in Figures 4A, 4B and 4C. The image forming apparatus 100 has to be provided with the plurality of connectors 111, 112, and 113, each being connectible with the panels 121, 122, and 123 to allow alternative arrangements of the panels 121, 122, and 123.

With the above described apparatus, it is possible to divide an operation panel of an image forming apparatus into a predetermined number of panels initially arranged at a plurality of positions and then to change the positions of the panels. That is, a user can locate the panels according to their preference or frequency of use of a certain panel. Accordingly, a user's convenience in manipulating, personalising or otherwise arranging the image forming apparatus can be improved.

Although specific embodiments have been shown and described, it will be appreciated that changes may be made in these embodiments without departing from the the scope of the invention, which is defined solely by the appended claims.

## Claims

1. Image forming apparatus (100) comprising:
a body; and
plural operation panels (121, 122, 123; 211, 212, 213, 214; 310, 320) connected at respective locations with the body,
**characterised in that** the operation panels are inter-changeable with one another.

2. Apparatus as claimed in claim 1, wherein each of the locations on the body includes a connector (110) comprising plural sub-connectors (111 a-c, 112a-c, 113a-c) each of which is connectible with a different one of the operation panels.

3. Apparatus as claimed in claim 2, wherein each sub-connector is connected to one or more bus lines (a1-4, b, c).

4. Apparatus as claimed in claim 2 or claim 3, wherein each sub-connector is visibly distinguishable from other sockets of the respective connector.

5. Apparatus as claimed in claim 4, wherein the sub-connectors of a connector are coloured differently.

6. Apparatus as claimed in any of claims 2 to 5, wherein the sub-connectors (111a-c, 112a-c, 113a-c) are sockets.

7. Apparatus as claimed in any preceding claim, wherein the operation panels include at least one input panel and at least one display panel.

8. A method of altering image forming apparatus (100) comprising: a body; and plural operation panels (121, 122, 123; 211, 212, 213, 214; 310, 320) connected at respective locations with the body,
the method being **characterised by** comprising inter-changing the operation panels with one another.
